# FASCICULE DE BREVET EUROPEEN

(11) **EP 2 277 318 B1**
(45) Date de publication et mention de la délivrance du brevet: **04.11.2020**
(21) Numéro de dépôt: 09742249.7
(22) Date de dépôt: 06.04.2009
(51) Int. Cl.: H04N 19/105

(54) **CODAGE ET DECODAGE D'UNE IMAGE OU D'UNE SEQUENCE D'IMAGES DECOUPEES SELON DES PARTITIONS DE PIXELS DE FORME LINEAIRE**
VIDEO- UND BILD(DE)KODIERUNG MIT AUFTEILUNG DES BILDES ODER DES VIDEOS IN LINEARE PIXELPARTITIONEN
CODING AND DECODING OF AN IMAGE OR OF A SEQUENCE OF IMAGES SLICED INTO PARTITIONS OF PIXELS OF LINEAR FORM

(30) Priorité: 15.04.2008 FR 0852532
(43) Date de publication de la demande: 26.01.2011
(73) Titulaire: ORANGE, 75015 Paris (FR)
(72) Inventeur: JUNG, Joël, 78320 Le Mesnil Saint Denis (FR); LAROCHE, Guillaume, 75015 Paris (FR)
(86) Numéro de dépôt international: PCT/FR2009/050584
(87) Numéro de publication internationale: WO 2009/136051

(56) Documents cités:
- WO-A-2008/088140
- YUMI SOHN ET AL: "One Dimensional Transform For H.264 Based Intra Coding (Abstract)" 26. PICTURE CODING SYMPOSIUM;7-11-2007 - 9-11-2007; LISBON,, 7 novembre 2007 (2007-11-07), XP030080458

## Description

### Arrière-plan de l'invention

La présente invention se rapporte de manière générale au domaine du traitement d'images, et plus précisément au codage et au décodage d'images numériques et de séquences d'images numériques.

Les images et séquences d'images numériques sont connues pour occuper beaucoup d'espace mémoire, ce qui nécessite, lorsqu'on transmet ces images, de les compresser afin d'éviter les problèmes d'encombrements sur le réseau de communication utilisé pour cette transmission, le débit utilisable sur celui-ci étant généralement limité.

La norme H.264/MPEG-4 AVC (d'après l'anglais "Advanced Video Coding"), telle que présentée dans le document ISO/IEC 14496-10, décrit notamment une technique selon laquelle des groupes de pixels, appelés macroblocs, d'une image courante sont prédits spatialement par rapport à d'autres macroblocs appartenant à la même image. C'est ce qu'on appelle le codage en Intra ("Intra-frame-coding"). Après ce codage prédictif, les blocs de pixels sont transformés, par une transformation de type transformée en cosinus discrète, puis quantifiés. Les coefficients des blocs de pixels quantifiés sont ensuite parcourus dans un ordre de lecture permettant d'exploiter le nombre important de coefficients nuls dans les hautes fréquences, puis sont codés par un codage entropique.

Plus précisément, lors du codage prédictif d'un macrobloc conformément à la norme précitée, à l'exception d'un macrobloc de type 16x16, le macrobloc est partitionné en blocs de plus petite taille, dont la forme est rectangulaire ou carrée. La prédiction spatiale d'un tel macrobloc dans une image consiste à prédire chaque bloc de plus petite taille formant ce macrobloc par rapport à un ou plusieurs blocs d'un autre macrobloc de cette même image. Cette prédiction n'est possible que si cet autre macrobloc est un macrobloc avoisinant le macrobloc à prédire et se trouvant dans certaines directions prédéterminées par rapport à celui-ci, c'est-à-dire généralement au dessus et à gauche, dans un voisinage dit "causal".

Ainsi par exemple, dans le cas d'un macrobloc de type 16x16, la prédiction des pixels qui sont situés en bas, à droite de ce macrobloc est nécessairement effectuée par rapport à des pixels de référence qui sont situés au-dessus et à gauche du macrobloc. De tels pixels de référence sont très éloignés spatialement des pixels à prédire.

La précision d'un tel type de prédiction n'est donc pas optimisée, surtout dans le cas de macroblocs ayant une activité spatiale élevée, c'est-à-dire dans le cas où l'image à coder présente de nombreux détails.

Dans le document YUMI SOHN ET AL : « One Dimensional Transform For H.264 Based Intra Coding (Abstract) » 26. PICTURE CODING SYMPOSIUM ; 7-11-2007 - 9-11-2007 ; LISBON, 7 novembre 2007 (2007-11-07), il est proposé, dans le cadre du codage d'une image découpée en blocs, de découper un bloc courant en partitions linéaires, puis de prédire l'une après l'autre ces partitions.

La présente invention vise à résoudre les inconvénients de la technique antérieure en fournissant des procédés et des dispositifs de codage et de décodage d'images, dans lesquels la distance de prédiction entre les pixels à prédire et les pixels de référence est minimisée, tout en optimisant la précision de la prédiction.

### Objet et résumé de l'invention

A cette fin, l'invention propose un procédé de codage d'une image ou d'une séquence d'images générant un flux de données comportant des données représentatives d'au moins un groupe de pixels dans une des images, selon la revendication 1.

Grâce à, d'une part, un tel découpage de macrobloc par propagation d'une partition de forme spécifique, différente de la forme carrée ou rectangulaire habituelle, et à, d'autre part, un ordre de parcours particulier des partitions du macrobloc, le codage Intra ainsi obtenu selon l'invention est rendu beaucoup plus fin que les codages Intra classiques, étant donné que la prédiction est effectuée avec des pixels de référence qui sont plus proches.

En outre, le fait que les partitions ne soient pas carrées ou rectangulaires permet une meilleure adaptation du codage à des structures ou motifs particuliers de l'image.

Enfin, le fait que l'ordre de parcours des partitions soit différent par rapport à l'ordre de parcours classique permet la création de nouvelles partitions de forme et de taille différents. De telles partitions présentent l'avantage de pouvoir utiliser des pixels de référence issus de plusieurs partitions déjà codées, puis décodées.

Selon des caractéristiques avantageuses, la pluralité d'ordres de parcours comprend
- un ordre de parcours dans lequel une partition courante est prédite par rapport à une partition dudit groupe de pixels, qui a déjà été précédemment sélectionnée, prédite, codée, puis décodée, et qui est immédiatement voisine de ladite partition courante, ledit ordre de parcours correspondant à l'ordre dans lequel les partitions ont été propagées : un tel ordre de parcours permet :
   - de prédire systématiquement les pixels d'une partition courante à prédire par rapport aux pixels d'une partition de référence immédiatement voisine;
   - d'appliquer, pour chaque partition, une transformée fréquentielle plus localisée, et donc mieux adaptée au contenu de la partition;
- un ordre de parcours différent de l'ordre dans lequel les partitions ont été propagées, dans lequel au moins une partition courante est prédite par rapport à deux partitions de référence du groupe de pixels qui lui sont immédiatement voisines et qui ont déjà été précédemment sélectionnées, prédites, codées, puis décodées : un tel mode de réalisation permet ainsi d'affiner la précision de la prédiction;
- un autre ordre de parcours différent de l'ordre dans lequel les partitions ont été propagées, ledit autre ordre étant de type dichotomique : un tel mode de réalisation permet ainsi d'affiner encore davantage la précision de la prédiction.

Selon encore une autre caractéristique avantageuse, le flux de données comprend des informations relatives à la forme de la partition initiale sélectionnée et à l'ordre de parcours qui a été sélectionné pour la prédiction des partitions dudit groupe de pixels.

Ainsi le décodeur est capable de déduire de façon déterministe, pour un macrobloc courant à décoder, la forme de la partition à propager et l'ordre dans lequel il va décoder les partitions d'un tel macrobloc. L'invention concerne aussi un procédé de décodage d'un flux de données représentatif d'une image ou d'une séquence d'images, selon la revendication 3.

L'invention concerne également un signal porteur d'un flux de données représentatif d'une image ou d'une séquence d'images, selon la revendication 4.

L'invention concerne encore un dispositif de codage d'une image ou d'une séquence d'images selon la revendication 5.

L'invention concerne aussi un dispositif de décodage d'un flux de données représentatif d'une image ou d'une séquence d'images, selon la revendication 6.

L'invention concerne encore un programme d'ordinateur comportant des instructions pour mettre en œuvre l'un des procédés selon l'invention, lorsqu'il est exécuté sur un ordinateur.

### Brève description des dessins

D'autres caractéristiques et avantages apparaîtront à la lecture de modes de réalisation préférés décrits en référence aux figures dans lesquelles:
- la figure 1 représente des étapes du procédé de codage selon l'invention,
- la figure 2 représente un mode de réalisation d'un dispositif de codage selon l'invention,
- la figure 3 représente différentes formes linéaires de partitions susceptibles d'êtres sélectionnées dans le dispositif de codage selon l'invention,
- la figure 4 représente des macroblocs partitionnés par propagation des différentes partitions initiales représentées à la figure 3,
- la figure 5 représente le macrobloc partitionné de la figure 4A, qui a été prédit selon trois ordres de parcours possibles,
- la figure 6 représente le macrobloc partitionné de la figure 4C, qui a été prédit selon un des trois ordres de parcours représentés figure 5,
- la figure 7 représente la structure d'un macrobloc codé par le dispositif de codage selon l'invention,
- la figure 8 représente le détail d'un champ qui compose la structure du macrobloc codé de la figure 7,
- la figure 9 représente un dispositif de décodage selon l'invention,
- la figure 10 représente des étapes du procédé de décodage selon l'invention.

### Description détaillée d'un mode de réalisation

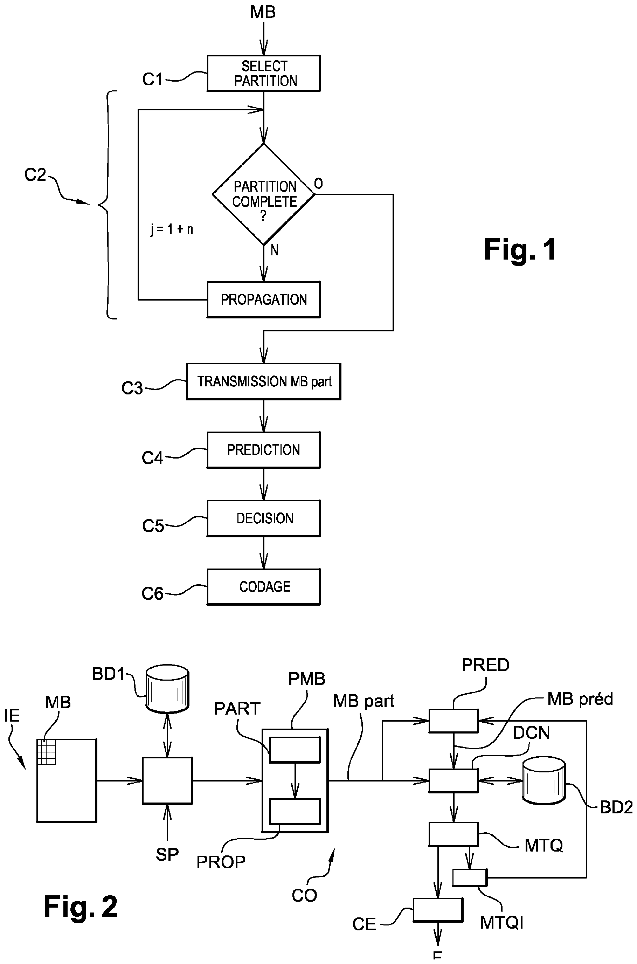

Un mode de réalisation de l'invention va maintenant être décrit, dans lequel le procédé de codage selon l'invention est utilisé pour coder une séquence d'images selon un flux binaire proche de celui qu'on obtient par un codage selon la norme H.264/MPEG-4 AVC. Dans ce mode de réalisation, le procédé de codage selon l'invention est par exemple implémenté de manière logicielle ou matérielle par modifications d'un codeur initialement conforme à la norme H.264/MPEG-4 AVC. Le procédé de codage selon l'invention est représenté sous la forme d'un algorithme comportant des étapes C1 à C6, représentées à la **figure 1****.**

Il est à noter que le procédé de décodage selon l'invention est symétriquement implémenté de manière logicielle ou matérielle par modifications d'un décodeur initialement conforme à la norme H.264/MPEG-4 AVC.

Selon le mode de réalisation de l'invention, le procédé de codage selon l'invention est implémenté dans un dispositif de codage CO représenté à la **figure 2****.** Le codage effectué par le codeur CO est de type Intra.

La première étape C1, représentée à la **figure 1****,** est la sélection, pour un groupe de pixels ou macrobloc appartenant à une image IE de la séquence d'images à coder, d'une partition particulière choisie dans un ensemble prédéterminé de partitions de forme linéaire prédéterminée. Pour cela, un macrobloc MB appartenant à l'image IE, par exemple de taille 8x8, est appliqué en entrée d'un module SP de sélection de partitions, représenté à la **figure 2****.**

Ce module SP de sélection de partitions utilise par exemple une méthode de choix par compétition exhaustive ou bien encore une méthode de choix à l'aide d'un algorithme avec à-priori De telles méthodes sont bien connues de l'homme du métier (cf: G.J. Sullivan and T.Wiegand, "Rate-distortion optimization for video compression," IEEE Signal Proc. Mag.,pp. 74-90, 1998). Elles ne seront donc pas décrites plus avant.

Lesdites partitions sont regroupées dans une base de données BD1 du codeur CO. Elles se caractérisent par le fait qu'elles ont des formes linéaires, ce qui les distinguent nettement des partitions carrées ou rectangulaires utilisées habituellement dans les techniques de codage de l'art antérieur.

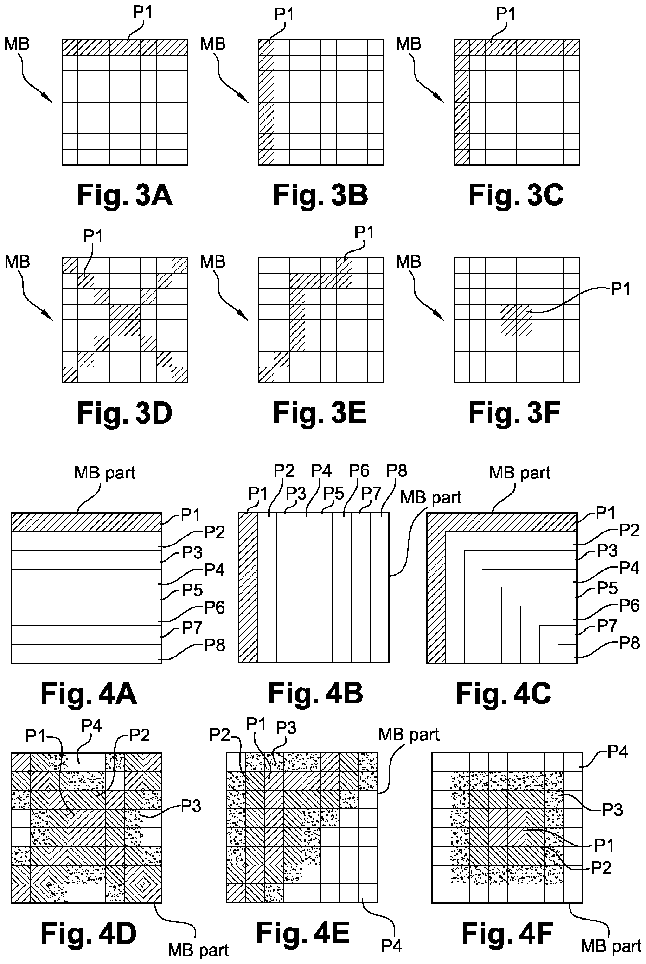

Différentes partitions d'un macrobloc, par exemple de taille 8x8, susceptibles d'être sélectionnées par le module de sélection SP, sont représentées à titre d'exemples non limitatifs sur la **figure 3****.**
La figure 3A représente un macrobloc MB découpé selon une partition initiale P1 ayant la forme d'une ligne.
La figure 3B représente un macrobloc MB découpé selon une partition initiale P1 ayant la forme d'une colonne.
La figure 3C représente un macrobloc MB découpé selon une partition initiale P1 ayant la forme d'un "L".
La figure 3D représente un macrobloc MB découpé selon une partition initiale P1 ayant la forme d'une croix.
La figure 3E représente un macrobloc MB découpé selon une partition initiale P1 ayant la forme d'une ligne brisée contenant des segments verticaux, horizontaux et diagonaux.
La figure 3F représente un macrobloc MB découpé selon une partition initiale P1 ayant la forme d'une ligne brisée dont les deux extrémités se rejoignent de façon à former un point. Une telle ligne brisée est par exemple déterminée par le gradient d'un macrobloc situé à la même position dans une image précédente (colocalisé).

L'étape suivante C2 représentée à **la** **figure 1** est le partitionnement du macrobloc MB, selon la partition initiale P1 choisie. Ce partitionnement est effectué par un module PMB de partitionnement de macroblocs représenté à **la** **figure 2****.** A cet effet, le module de partitionnement PMB comprend un sous-module de découpage PART destiné à découper une première fois le macrobloc MB selon la prédiction initiale P1 sélectionnée, comme cela est représenté à **la** **figure 3****.**

En référence à **la** **figure 2****,** le module de partitionnement PMB comprend en outre un sous-module de propagation PROP destiné à propager ladite partition initiale sélectionnée P1 un nombre n de fois (n étant un entier) dans le macrobloc MB, jusqu'à ce que ce dernier soit découpé dans sa totalité en un nombre n+1 de partitions de forme prédéterminée.

Le module de propagation PMB utilise un algorithme de propagation qui utilise par exemple un opérateur de morphologie mathématique, comme par exemple une dilatation bien connue de l'homme du métier. Une telle dilatation est décrite en particulier dans l'ouvrage : "Fundamentals of Digital Image Processing", A.K.Jain, Prentice Hall Editions.

Un tel algorithme permet ainsi avantageusement de partitionner un macrobloc de façon déterministe, quelle que soit la forme de la partition initiale.

Selon une variante de l'invention, l'algorithme de propagation pourrait utiliser une fonction de calcul de minimisation de la distance de prédiction entre une partition courante Pj à prédire (1≤j≤n+1) et au moins la partition précédente Pj-1, une fois que cette dernière a été codée puis décodée.

**La** **figure 4** représente les macroblocs MBpart qui ont été obtenus après découpage selon les partitions initiales P1 représentées à **la** **figure 3****.**

Comme on peut le constater, l'algorithme de propagation selon l'invention est conçu de façon à ce que les partitions P1,....,Pn+1 ainsi obtenues :
- aient la même forme ou sensiblement la même forme que la partition initiale P1,
- ne se chevauchent pas dans le macrobloc MBpart,
- et n'ont pas nécessairement le même nombre de pixels.

La figure 4A représente un macrobloc partitionné MBpart comprenant huit partitions P1,..., P8, ayant toutes la forme d'une ligne et le même nombre de pixels.

La figure 4B représente un macrobloc partitionné MBpart comprenant huit partitions P1...P8, ayant toutes la forme d'une colonne et le même nombre de pixels.

La figure 4C représente un macrobloc partitionné MBpart comprenant huit partitions P1...P8, ayant toutes la forme d'un "L", sauf la dernière partition P8, mais chacune un nombre différent de pixels.

La figure 4D représente un macrobloc partitionné MBpart comprenant quatre partitions P1...P4, ayant quasiment toutes la forme d'une croix mais un nombre différent de pixels.

La figure 4E représente un macrobloc partitionné MBpart comprenant quatre partitions P1...P4, ayant quasiment toutes la forme d'une ligne brisée contenant des segments verticaux, horizontaux et diagonaux, mais chacune un nombre différent de pixels.

La figure 4F représente un macrobloc partitionné MBpart comprenant quatre partitions P1...P4, ayant toutes la forme d'une ligne brisée dont les deux extrémités se rejoignent, mais chacune un nombre différent de pixels.

A la suite de l'étape de partitionnement C2, au cours d'une étape C3 représentée à **la** **figure 1****,** le module de partitionnement PMB transmet le macrobloc MBpart qui vient d'être partitionné à un module de calcul de prédiction PRED représenté à **la** **figure 2****.**

Au cours d'une étape C4 représentée à **la** **figure 1****,** le module de calcul de prédiction PRED calcule différentes prédictions possibles du macrobloc partitionné MBpart reçu. Compte tenu du fait que le codeur CO est de type Intra, le module de calcul de prédiction PRED calcule les prédictions spatiales possibles de chaque partition P1,..., Pn+1 du macrobloc MBpart, par rapport à la dernière partition précédemment codée puis décodée.

De façon particulièrement avantageuse, le module de calcul de prédiction PRED prédit les partitions du macrobloc MBpart l'une après l'autre, une partition courante à prédire étant prédite en référence à la partition qui la précède immédiatement et qui a été codée puis décodée, de façon à servir de partition de référence.

Ainsi, la distance de prédiction est minimisée, puisque la prédiction d'une partition se fait par rapport à des pixels de référence situés à proximité des pixels de ladite partition à prédire.

En référence à **la** **figure 2****,** une telle partition de référence est codée conformément à la norme H.264/MPEG-4AVC, c'est-à-dire qu'elle subit, de façon connue en soi:
- un codage par transformée en cosinus discrète et quantification qui est effectué par un module MTQ de transformée et de quantification,
- puis un décodage par transformée en cosinus discrète inverse et quantification inverse, lequel est effectué par le module MTQI de transformée et de quantification inverse.

Dans le mode de réalisation décrit, trois types de prédictions spatiales sont envisagés qui correspondent respectivement à trois ordres de parcours différents O1, O2, O3 des partitions, dans lesquels le module de calcul de prédiction PRED a la possibilité de prédire les partions P1,..., Pn+1 d'un macrobloc partitionné MBpart.

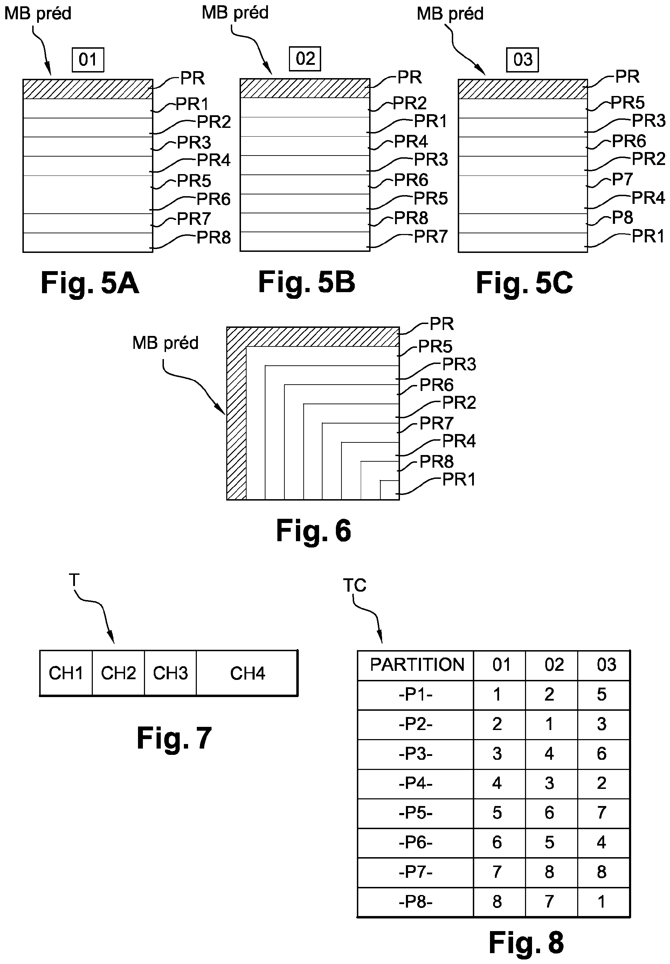

Pour une même forme de partition initiale P1 sélectionnée, trois macroblocs MBpréd, qui ont été prédits conformément aux trois ordres de parcours précités, sont illustrés en référence à **la** **figure 5****.**

On suppose, dans l'exemple représenté à **la** **figure 5****,** que chaque macrobloc partitionné MBpart à prédire est celui de la figure 4A, c'est à dire découpé en huit partitions P1,..., P8 ayant la forme de lignes. Il est toutefois bien entendu que les partitions ayant les autres formes représentées aux figures 4B à 4F sont également adaptées à être prédites conformément aux trois ordres de parcours O1, O2, O3 qui vont être décrits.

En référence à la figure 5A, les partitions P1,..., P8 du macrobloc MBpart sont prédites l'une après l'autre, dans l'ordre où elles ont été propagées à la figure 4A.

Plus précisément, le module de calcul de prédiction PRED de **la** **figure 2** parcourt de la gauche vers la droite une première ligne du macrobloc MBpart, afin de prédire la première partition P1, dite partition initiale. La première ligne de prédiction choisie correspond à la première ligne du macrobloc MBpart. Le module de calcul de prédiction PRED prédit ladite partition P1 en référence aux pixels de la partition de référence PR d'un macrobloc voisin (non représenté), laquelle venant immédiatement d'être codée, puis décodée, comme expliqué précédemment. Le module de calcul de prédiction PRED délivre une première partition prédite qui est immédiatement codée par le module de transformée et de quantification MTQ, puis décodée par le module par le module MTQI de transformée et de quantification inverse. A l'issue de ces opérations, une partition de référence PR1 est obtenue, comme représenté à la figure 5A.

Le module de calcul de prédiction PRED parcourt ensuite de la gauche vers la droite une seconde ligne du macrobloc MBpart. La seconde ligne choisie est la seconde ligne du macrobloc MBpart. Le module de calcul de prédiction PRED choisit d'affecter cette seconde ligne à la prédiction de la seconde partition P2 du macrobloc MBpart. Le module de calcul de prédiction PRED prédit ladite partition P2 en référence aux pixels de la partition PR1 qui vient immédiatement d'être codée, puis décodée, comme expliqué ci-dessus. Le module de calcul de prédiction PRED délivre une seconde partition prédite qui est immédiatement codée par le module de transformée et de quantification MTQ, puis décodée par le module MTQI de transformée et de quantification inverse. A l'issue de ces opérations, une partition de référence PR2 est obtenue, comme représenté à la figure 5A.

Le module de calcul de prédiction PRED procède de la façon décrite ci-dessus pour les partitions P3, P4, P5, P6, P7, puis P8 du macrobloc MBpart de la figure 4A. A l'issue de cette prédiction et en référence à la figure 5A, un macrobloc prédit MBpréd est obtenu, les partitions prédites PR1, PR2,...., PR8 se succédant dans le macrobloc prédit MBpréd, dans l'ordre où les partitions P1, P2,..., P8 associées avaient été propagées.

En référence maintenant à la figure 5B, les partitions du macrobloc MB sont prédites l'une après l'autre, mais dans un ordre différent de celui dans lequel elles ont été propagées à la figure 4A.

Plus précisément, le module de calcul de prédiction PRED de la figure 2 parcourt de la gauche vers la droite une première ligne du macrobloc MBpart représenté figure 4A qui est destinée à être affectée à la prédiction de la partition initiale P1. La première ligne choisie correspond à la seconde ligne du macrobloc MBpart. Le module de calcul de prédiction PRED prédit alors ladite partition P1 en référence aux pixels de la partition de référence PR d'un macrobloc voisin (non représenté), laquelle venant immédiatement d'être codée, puis décodée, comme expliqué précédemment. Bien que les pixels de référence de la partition de référence PR ne soient pas immédiatement à proximité des pixels à prédire, comme c'était le cas dans l'exemple de la figure 5A, ces pixels de référence le sont toutefois suffisamment pour que la distance de prédiction soit minimisée correctement. Le module de calcul de prédiction PRED délivre une première partition prédite qui est immédiatement codée par le module de transformée et de quantification MTQ, puis décodée par le module par le module MTQI de transformée et de quantification inverse. A l'issue de ces opérations, une partition de référence PR1 est obtenue, comme représenté à la figure 5B.

Le module de calcul de prédiction PRED parcourt ensuite de la gauche vers la droite une seconde ligne du macrobloc MBpart qui est destinée à être affectée à la prédiction de la seconde partition P2. La seconde ligne choisie est la première ligne du macrobloc MBpart. Le module de calcul de prédiction PRED prédit ladite partition P2 en référence aux pixels de la partition PR1 qui vient immédiatement d'être codée, puis décodée, comme expliqué ci-dessus, mais également en référence aux pixels de ladite partition de référence PR.

Le module de calcul de prédiction PRED délivre une seconde partition prédite qui est immédiatement codée par le module de transformée et de quantification MTQ, puis décodée par le module MTQI de transformée et de quantification inverse. A l'issue de ces opérations, une partition de référence PR2 est obtenue, comme représenté à la figure 5B.

La prédiction de la partition P2 est ainsi beaucoup plus précise que dans l'exemple de la figure 5A, puisque la partition P2 est prédite en référence à deux partitions de référence immédiatement voisines de cette dernière, au lieu d'être prédite en référence à une seule partition de référence.

Le module de calcul de prédiction PRED procède de la façon décrite ci-dessus, en effectuant la prédiction des partitions P3, P4, P5, P6, P7 et P8, respectivement sur les quatrième, troisième, sixième, cinquième, huitième et septième lignes du macrobloc MBpart de la figure 4A. A l'issue de cette prédiction et en référence à la figure 5B, un macrobloc prédit MBpréd est obtenu, les partitions prédites PR2, PR1,...Pi+1, Pi,..., PR8, PR7 se succédant dans le macrobloc prédit MBpréd, dans un ordre différent de l'ordre de propagation des partitions P1 à P8.

Le choix de l'ordre de parcours qui vient d'être décrit en liaison avec un partitionnement de type linéaire permet d'obtenir un gain d'environ 4% sur le débit par rapport aux gains obtenus dans les codages Intra classiques.

En référence maintenant à la figure 5C, les partitions du macrobloc MBpart sont prédites l'une après l'autre, dans encore un ordre différent de celui dans lequel elles ont été propagées à la figure 4A. L'ordre de parcours décrit à la figure 5C est de type dichotomique.

Plus précisément, le module de calcul de prédiction PRED de **la** **figure 2** parcourt de la gauche vers la droite une première ligne du macrobloc MBpart représenté figure 4A qui est destinée à être affectée à la prédiction de la partition initiale P1. La première ligne choisie correspond à la dernière ligne du macrobloc MBpart. Le module de calcul de prédiction PRED prédit alors ladite partition P1 en référence aux pixels de la partition de référence PR d'un macrobloc voisin (non représenté), laquelle venant immédiatement d'être codée, puis décodée, comme expliqué précédemment. Le module de calcul de prédiction PRED délivre une première partition prédite qui est immédiatement codée par le module de transformée et de quantification MTQ, puis décodée par le module MTQI de transformée et de quantification inverse. A l'issue de ces opérations, une partition de référence PR1 est obtenue, comme représenté à la figure 5C.

Le module de calcul de prédiction PRED parcourt ensuite de la gauche vers la droite une seconde ligne du macrobloc MBpart qui est destinée à être affectée à la prédiction de la seconde partition P2. La seconde ligne choisie est la quatrième ligne du macrobloc MBpart. Le module de calcul de prédiction PRED prédit ladite partition P2 en référence aux pixels de la partition PR1 qui vient immédiatement d'être codée, puis décodée, comme expliqué ci-dessus, mais également en référence aux pixels de ladite partition de référence PR.

Le module de calcul de prédiction PRED délivre une seconde partition prédite qui est immédiatement codée par le module de transformée et de quantification MTQ, puis décodée par le module MTQI de transformée et de quantification inverse. A l'issue de ces opérations, une partition de référence PR2 est obtenue, comme représenté à la figure 5C.

La prédiction de la partition P2, bien qu'effectuée avec des pixels de référence sensiblement éloignés de cette dernière, est toutefois beaucoup plus précise que dans l'exemple de la figure 5A, puisque la partition P2 est prédite en référence à deux partitions de référence, au lieu d'être prédite en référence à une seule partition de référence.

Le module de calcul de prédiction PRED parcourt ensuite de la gauche vers la droite une troisième ligne du macrobloc MBpart qui est destinée à être affectée à la prédiction de la troisième partition P3. La troisième ligne choisie est la deuxième ligne du macrobloc MBpart. Le module de calcul de prédiction PRED prédit ladite partition P3 en référence aux pixels de la partition PR2 qui vient immédiatement d'être codée, puis décodée, comme expliqué ci-dessus, mais également en référence aux pixels de ladite partition de référence PR.

Le module de calcul de prédiction PRED délivre une troisième partition prédite qui est immédiatement codée par le module de transformée et de quantification MTQ, puis décodée par le module MTQI de transformée et de quantification inverse. A l'issue de ces opérations, une partition de référence PR3 est obtenue, comme représenté à la figure 5C.

Le module de calcul de prédiction PRED parcourt ensuite de la gauche vers la droite une quatrième ligne du macrobloc MBpart qui est destinée à être affectée à la prédiction de la quatrième partition P4. La quatrième ligne choisie est la sixième ligne du macrobloc MBpart. Le module de calcul de prédiction PRED prédit ladite partition P4 en référence aux pixels des partitions de référence les plus proches de cette dernière, à savoir les pixels de la partition PR1 et les pixels de la partition PR2.

Le module de calcul de prédiction PRED délivre une quatrième partition prédite qui est immédiatement codée par le module de transformée et de quantification MTQ, puis décodée par le module MTQI de transformée et de quantification inverse. A l'issue de ces opérations, une partition de référence PR4 est obtenue, comme représenté à la figure 5C.

Le module de calcul de prédiction PRED parcourt ensuite de la gauche vers la droite une cinquième ligne du macrobloc MBpart qui est destinée à être affectée à la prédiction de la cinquième partition P5. La cinquième ligne choisie est la première ligne du macrobloc MBpart. Le module de calcul de prédiction PRED prédit ladite partition P5 en référence aux pixels des partitions de référence les plus proches de cette dernière, à savoir les pixels de la partition PR et les pixels de la partition PR3.

Le module de calcul de prédiction PRED délivre une cinquième partition prédite qui est immédiatement codée par le module de transformée et de quantification MTQ, puis décodée par le module MTQI de transformée et de quantification inverse. A l'issue de ces opérations, une partition de référence PR5 est obtenue, comme représenté à la figure 5C.

Le module de calcul de prédiction PRED parcourt ensuite de la gauche vers la droite une sixième ligne du macrobloc MBpart qui est destinée à être affectée à la prédiction de la sixième partition P6. La sixième ligne choisie est la troisième ligne du macrobloc MBpart. Le module de calcul de prédiction PRED prédit ladite partition P6 :
- en référence aux pixels des partitions de référence les plus proches de cette dernière, à savoir les pixels des partitions PR2 et PR3,
- mais également en référence aux pixels des partitions de référence plus éloignées de cette dernière et décalées par rapport à cette dernière d'un nombre de partitions identique, à savoir les pixels des partitions PR et PR4,

Le module de calcul de prédiction PRED délivre une sixième partition prédite qui est immédiatement codée par le module de transformée et de quantification MTQ, puis décodée par le module MTQI de transformée et de quantification inverse. A l'issue de ces opérations, une partition de référence PR6 est obtenue, comme représenté à la figure 5C.

Le module de calcul de prédiction PRED parcourt ensuite de la gauche vers la droite une septième ligne du macrobloc MBpart qui est destinée à être affectée à la prédiction de la septième partition P7. La septième ligne choisie est la cinquième ligne du macrobloc MBpart. Le module de calcul de prédiction PRED prédit ladite partition P7 :
- en référence aux pixels des partitions de référence les plus proches de cette dernière, à savoir les pixels des partitions PR2 et PR4,
- mais également en référence aux pixels des partitions de référence plus éloignées de cette dernière et décalées par rapport à cette dernière d'un nombre de partitions identiques, à savoir les pixels des partitions PR1 et PR5.

Le module de calcul de prédiction PRED délivre une septième partition prédite qui est immédiatement codée par le module de transformée et de quantification MTQ, puis décodée par le module MTQI de transformée et de quantification inverse. A l'issue de ces opérations, une partition de référence PR7 est obtenue, comme représenté à la figure 5C.

Le module de calcul de prédiction PRED parcourt ensuite de la gauche vers la droite une huitième ligne du macrobloc MBpart qui est destinée à être affectée à la prédiction de la huitième partition P8. La huitième ligne choisie est la septième ligne du macrobloc MBpart. Le module de calcul de prédiction PRED prédit ladite partition P8 en référence aux pixels des partitions de référence les plus proches de cette dernière, à savoir les pixels des partitions PR1 et PR4.

Le module de calcul de prédiction PRED délivre une huitième partition prédite qui est immédiatement codée par le module de transformée et de quantification MTQ, puis décodée par le module MTQI de transformée et de quantification inverse. A l'issue de ces opérations, une partition de référence PR8 est obtenue, comme représenté à la figure 5C.

Conformément à l'ordre de parcours représenté figure 5C, bien que la prédiction de certaines partitions est effectuée avec des pixels de référence sensiblement éloignés de ces dernières, la précision de la prédiction du macrobloc MBpart dans sa totalité reste élevée, compte tenu du fait que certaines partitions sont prédites en référence à deux partitions de référence et que certaines autres partitions peuvent être prédites en référence à quatre partitions de référence.

A l'issue de cette prédiction et en référence à la figure 5C, un macrobloc prédit MBpréd est obtenu, les partitions prédites PR5, PR3,..., PR2,..., PR8, PR1 se succédant dans le macrobloc prédit MBpréd, selon un ordre dichotomique différent de l'ordre de propagation des partitions P1 à P8.

Le choix de l'ordre de parcours qui vient d'être décrit en liaison avec un partitionnement de type linéaire permet d'obtenir un gain d'environ 3% sur le débit par rapport aux gains obtenus dans les codages Intra classiques.

Le troisième ordre de parcours des partitions qui vient d'être décrit convient particulièrement à la prédiction d'un macrobloc MBpart de texture non uniforme, ce qui est le cas lorsque l'image IE contient de nombreux détails, ou des variations de luminance sur des motifs ressemblant à la partition. Il a été observé en particulier qu'en sélectionnant une partition initiale P1 en forme de "L" comme représenté en figure 3C, le coût du codage utilisé en termes de débit et distorsion était sensiblement réduit.

Un macrobloc prédit MBPréd qui a été prédit selon ce troisième ordre de parcours, sur la base de la propagation d'une partition initiale P1 en forme de "L", est représenté à **la** **figure 6****.**

Le coût en termes de débit et distorsion est certes élevé pour obtenir la première partition prédite PR1 qui est très éloignée de la partition de référence PR. Toutefois, cette première prédiction est effectuée sur un seul pixel qui présente l'avantage de pouvoir servir à la prédiction des pixels des autres partitions du macrobloc MBpart de la figure 4C. Au final, la prédiction du macrobloc MBpart dans sa totalité est d'une plus grande précision que dans le cas d'une prédiction par blocs classique ou que dans le cas des autres ordres de parcours de partitions qui ont été décrits ci-dessus.

Une fois les prédictions possibles calculées par le module de calcul de prédiction PRED, au cours d'une étape C5 représentée à **la** **figure** 1, un module de décision DCN, représenté à **la** **figure 2****,** parcourt les macroblocs partitionnés de l'image IE et choisit, dans cette étape C5, le mode de prédiction utilisé pour coder chacun de ces macroblocs. Parmi les prédictions possibles pour un macrobloc, le module de décision DCN choisit la prédiction optimale selon un critère débit distorsion bien connu de l'homme du métier.

Pour un macrobloc MB courant à coder, le module de décision DCN met par exemple en compétition :
- les trois ordres de parcours de partitions représentés à **la** **figure 5****,** le macrobloc MB courant ayant été partitionné par exemple comme représenté figure 4A,
- et le mode de prédiction classique, le macrobloc MB courant ayant été partitionné selon des blocs de forme carrée, de taille 8x8.

Selon une autre variante, le module de décision DC met par exemple en compétition :
- les deux ordres de parcours de partitions O1, O2 représentés respectivement sur les figures 5A et 5B, le macrobloc MB courant ayant été partitionné par exemple comme représenté figure 4A,
- l'ordre de parcours dichotomique 03 représenté sur **la** **figure 6****,** le macrobloc MB courant ayant été partitionné par exemple comme représenté figure 4C,
- et le mode de prédiction classique, le macrobloc MB courant ayant été partitionné selon des blocs de forme carrée, de taille 8x8.

Chaque macrobloc prédit MBpréd est codé, au cours d'une étape C6, comme dans la norme H.264/MPEG-4 AVC. Plus précisément en référence à la figure 7, où une tranche T de macrobloc codé de l'image IE est représentée, chaque macrobloc codé comporte un champ CH1 précisant le type de codage du macrobloc MB considéré, Intra dans le cas du mode de réalisation représenté, un champ CH2 indiquant la forme de la partition sélectionnée (carrée, ligne, colonne, croix, "L", etc...), un champ CH3 indiquant le mode de prédiction utilisé (mode de prédiction classique ou ordres de parcours O1, O2 ou O3 tels que décrits ci-dessus), et un champ CH4 codant les valeurs des résidus du macrobloc prédit MBpréd.

Comme on peut le voir à **la** **figure 8****,** les informations codées dans le champ CH3 sont contenues préalablement dans une base de données BD2 du codeur CO représenté à **la** **figure 2****.**

En référence à nouveau à **la** **figure 8****,** de telles informations de correspondance sont mémorisées dans une table de correspondance TC à quatre colonnes. La première colonne comprend un champ "partition" qui liste toutes les partitions d'un macrobloc MBpart, dans l'ordre où elles ont été propagées. Les deuxième à quatrième colonnes comprennent chacune un champ "ordre de parcours" O1, O2, O3 qui affecte à chaque partition propagée un numéro d'ordre de parcours spécifique pour sa prédiction, comme cela a été décrit ci-dessus.

Une fois ce codage structurel effectué par le module de décision DCN, les coefficients de résidus s'ils existent, correspondants aux blocs de l'image IE, sont envoyés au module MTQ de transformée et de quantification, pour subir des transformées en cosinus discrètes puis une quantification. Les tranches de macroblocs avec ces coefficients quantifiés sont ensuite transmises au module CE de codage entropique, pour produire, avec les autres images de la séquence vidéo déjà codées de la même façon que l'image IE, un flux vidéo F, binaire, codé selon l'invention.

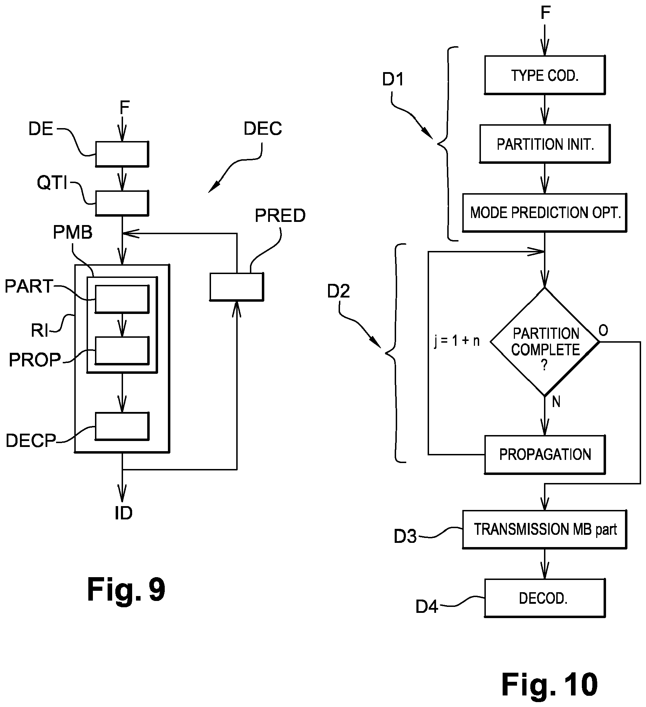

Le flux binaire F ainsi codé est transmis par un réseau de communication, à un terminal distant. Celui-ci comporte un décodeur DEC selon l'invention, représenté à la **figure 9****.**

Le flux binaire F est d'abord envoyé à un module DE de décodage entropique, décodage inverse de celui effectué par le module de codage entropique CE représenté à **la** **figure 2****.** Puis, pour chaque macrobloc d'image à reconstruire, les coefficients décodés par le module DE sont envoyés à un module QTI de quantification inverse et de transformée inverse.

Un module RI de reconstruction d'image reçoit alors des données décodées correspondant aux données produites par le module DCN **(****figure 2****)** à l'étape C5 de codage selon l'invention, aux erreurs de transmission près. Le module RI met en œuvre des étapes D1 à D4 du procédé de décodage selon l'invention, telle que représentées à la **figure 10****.**

La première étape D1 est le décodage de structures de données codées dans une tranche T d'un macrobloc courant de l'image IE à décoder. De façon connue en soi, le module de reconstruction RI détermine dans le champ CH1 **(****figure 7****)** que les données de la tranche T ont subi un codage de type Intra.

Au cours de cette même étape, le module de reconstruction RI détermine, conformément au procédé de décodage selon l'invention :
- la forme de la partition initiale P1 à reconstruire, grâce au champ CH2 (figure 7),
- le mode de prédiction optimal sélectionné par le module de décision DCN **(****figure 2****)**, grâce au champ CH3.

Si par exemple, la partition initiale P1 a la forme d'un "L" comme représenté figure 4C et que le mode de prédiction optimal est l'ordre de parcours 03 représenté figure 5C, le module de reconstruction RI en déduit l'ordre dans lequel vont être décodées les différentes partitions P1 à P8 du macrobloc courant. Une telle déduction est effectuée au moyen de la table TC représentée **figure 8** et mémorisée dans le décodeur DEC.

L'étape suivante D2 représentée à **la** **figure 10** est le partitionnement du macrobloc courant à décoder, selon la partition initiale P1 déterminée à l'étape D1. Ce partitionnement est effectué par un module PMB de partitionnement de macroblocs qui ressemble en tous point à celui représenté à **la** **figure 2****.**

A cet effet, en référence à **la** **figure 10****,** le module de partitionnement PMB comprend :
- un sous-module de découpage PART destiné à découper une première fois le macrobloc courant à décoder selon la partition initiale P1 déterminée,
- un sous-module de propagation PROP destiné à propager ladite partition initiale déterminée P1 un nombre n de fois (n étant un entier) dans le macrobloc MB, jusqu'à ce que ce dernier soit découpé dans sa totalité en un nombre n+1 de partitions de forme prédéterminée.

Le module de propagation PMB utilise un algorithme de propagation du type de celui qui a été décrit précédemment.

A la suite de l'étape de partitionnement D2, au cours d'une étape D3 représentée à **la** **figure 10****,** le module de partitionnement PMB transmet le macrobloc courant à décoder et qui vient d'être partitionné en n+1 partitions, à un module de décodage de partitions DECP représenté à **la** **figure 9****.**

Au cours d'une étape D4 représentée à la **figure 10****,** le module DECP effectue alors un décodage des n+1 partitions selon l'ordre de décodage déterminé à l'étape D1.

A cet effet, pour chaque partition à décoder d'un macrobloc courant à décoder, le module de décodage DECP utilise des valeurs de prédiction de la partition immédiatement précédente qui sont fournies par le module PRED de calcul de prédiction, représenté sur la **figure 9****.**

Le module PRED de calcul de prédiction reçoit en effet les valeurs des partitions précédemment décodées par le module de reconstruction RI, valeurs qu'il garde en mémoire.

Les n+1 partitions d'un macrobloc de l'image IE sont décodées en utilisant la prédiction spatiale Intra indiqué dans le champ CH1 représenté à **la** **figure 7****.**

Une fois tous les macroblocs de l'image IE décodés, le module RI de reconstruction d'image fournit en sortie du décodeur DEC, une image ID correspondant au décodage de l'image IE.

## Revendications

1. Procédé de codage d'une image ou d'une séquence d'images générant un flux (F) de données comportant des données représentatives d'au moins un groupe de pixels dans une desdites images (IE), **caractérisé en ce qu'**il comporte les étapes de:
- sélection (C1), pour un groupe de pixels (MB) à coder, d'une partition initiale (P1) prédéterminée ayant la forme d'au moins une ligne, brisée ou non brisée,
- découpage partiel (C2) dudit groupe de pixels à coder selon la partition initiale sélectionnée,
- propagation (C2) de ladite partition initiale sélectionnée dans le reste dudit groupe de pixels à coder, de façon à obtenir un groupe de pixels (MBpart) découpé dans sa totalité, le reste dudit groupe de pixels étant découpé en une pluralité de partitions ayant chacune une forme adaptée pour occuper complètement, sans se chevaucher deux à deux, le reste dudit groupe de pixels à coder,
- prédiction (C4) du groupe de pixels comprenant ce qui suit :
- sélection, dans le groupe de pixels, d'une première partition courante à prédire,
- prédiction de ladite première partition courante sélectionnée, par rapport à une partition ayant déjà été codée, puis décodée et appartenant à un groupe de pixels voisin dudit groupe de pixels,
- codage/décodage de ladite première partition courante prédite,
- prédiction l'une après l'autre des autres partitions du groupe de pixels, chaque partition étant prédite par rapport à au moins une partition dudit groupe de pixels, qui a déjà été précédemment sélectionnée, codée, puis décodée,
- sélection (C5), parmi une pluralité d'ordres de parcours dans lesquels les partitions dudit groupe de pixels sont prédites, d'un ordre de parcours optimisant la prédiction dudit groupe de pixels selon un critère débit distorsion, ladite pluralité d'ordres de parcours comprenant :
- un ordre de parcours, dans lequel une partition courante est prédite par rapport à une partition dudit groupe de pixels, qui a déjà été précédemment sélectionnée, prédite, codée, puis décodée, et qui est immédiatement voisine de ladite partition courante, ledit ordre de parcours correspondant à l'ordre dans lequel les partitions ont été propagées,
- un ordre de parcours, différent de l'ordre dans lequel les partitions ont été propagées, dans lequel au moins une partition courante est prédite par rapport à deux partitions dudit groupe de pixels qui lui sont immédiatement voisines et qui ont déjà été précédemment sélectionnées, prédites, codées, puis décodées, ,
- un autre ordre de parcours, différent de l'ordre dans lequel les partitions ont été propagées, ledit autre ordre de parcours étant dichotomique,
- codage (C6) du groupe de pixels prédit (MBpréd) conformément à l'ordre de parcours sélectionné selon ledit critère.

2. Procédé de codage selon la revendication 1, dans lequel le flux de données (F) comprend des informations relatives à la forme de ladite partition initiale sélectionnée (CH2) et à l'ordre de parcours (O1; O2; O3) qui a été sélectionné (CH3) pour la prédiction des partitions dudit groupe de pixels.

3. Procédé de décodage d'un flux (F) de données représentatif d'une image ou d'une séquence d'images, ledit flux (F) comportant des données représentatives d'au moins un groupe de pixels dans une desdites images (IE), **caractérisé en ce qu'**il comporte les étapes de:
- décodage des données représentatives dudit au moins un groupe de pixels,
- détermination (D1), parmi lesdites données décodées, d'une partition initiale prédéterminée ayant la forme d'au moins une ligne brisée ou non brisée,
- découpage partiel (D2) dudit groupe de pixels à décoder selon ladite partition initiale déterminée,
- propagation (D2), identique au codage, de ladite partition initiale déterminée, dans le reste dudit groupe de pixels à décoder, de façon à obtenir un groupe de pixels (MBpart) à décoder qui est découpé dans sa totalité, le reste dudit groupe de pixels à décoder étant découpé en une pluralité de partitions ayant chacune une forme adaptée pour occuper complètement, sans se chevaucher deux à deux, le reste dudit groupe de pixels à décoder,
- détermination, parmi lesdites données décodées, d'un ordre de parcours desdites partitions qui a été sélectionné parmi une pluralité d'ordres de parcours lors du codage du groupe de pixels à décoder, comme optimisant la prédiction dudit groupe de pixels selon un critère débit distorsion, ladite pluralité d'ordres de parcours comprenant :
- un ordre de parcours, dans lequel une partition courante est prédite par rapport à une partition dudit groupe de pixels, qui a déjà été précédemment sélectionnée, prédite, puis décodée, et qui est immédiatement voisine de ladite partition courante, ledit ordre de parcours correspondant à l'ordre dans lequel les partitions ont été propagées,
- un ordre de parcours, différent de l'ordre dans lequel les partitions ont été propagées, dans lequel au moins une partition courante est prédite par rapport à deux partitions dudit groupe de pixels qui lui sont immédiatement voisines et qui ont déjà été précédemment sélectionnées, prédites, puis décodées,
- un autre ordre de parcours, différent de l'ordre dans lequel les partitions ont été propagées, ledit autre ordre de parcours étant dichotomique,
- prédiction du groupe de pixels à décoder comprenant ce qui suit :
- sélection, dans le groupe de pixels à décoder, d'une première partition courante à prédire conformément audit ordre de parcours qui a été déterminé parmi lesdites données décodées,
- prédiction de ladite première partition courante sélectionnée, par rapport à une partition ayant déjà été décodée et appartenant à un groupe de pixels voisin dudit groupe de pixels à décoder,
- décodage de ladite première partition courante prédite,
- prédiction l'une après l'autre desdites autres partitions, selon ledit ordre de parcours déterminé,
- obtention d'un groupe de pixels décodé une fois que toutes les partitions dudit groupe de pixels ont été prédites et décodées conformément audit ordre de parcours déterminé.

4. Signal porteur d'un flux (F) de données représentatif d'une image ou d'une séquence d'images, ledit flux (F) comportant des données représentatives d'au moins un groupe de pixels dans une desdites images (IE) qui a été codé selon la revendication 1 ou 2, **caractérisé en ce que** :
- certaines desdites données représentatives sont relatives à la forme d'au moins une ligne brisée ou non brisée d'une partition initiale prédéterminée qui a été sélectionnée au moment de la prédiction dudit groupe de pixels,
- et certaines autres desdites données représentatives sont relatives audit ordre de parcours sélectionné, dans lequel les partitions formant ledit groupe de pixels sont prédites.

5. Dispositif de codage (CO) d'une image ou d'une séquence d'images générant un flux (F) de données comportant des données représentatives d'au moins un groupe de pixels dans une desdites images (IE), **caractérisé en ce qu'**il comporte:
- des moyens de sélection (SP), pour un groupe de pixels (MB) à coder, d'une partition initiale (P1) prédéterminée ayant la forme d'au moins une ligne brisée ou non brisée,
- des moyens de découpage partiel (PMB) dudit groupe de pixels à coder selon ladite partition initiale sélectionnée,
- des moyens de propagation (PROP) de ladite partition initiale sélectionnée dans le reste dudit groupe de pixels à coder, de façon à obtenir un groupe de pixels (MBpart) découpé dans sa totalité, le reste dudit groupe de pixels étant découpé en une pluralité de partitions ayant chacune une forme adaptée pour occuper complètement, sans se chevaucher deux à deux, le reste dudit groupe de pixels à coder,
- un module de calcul de prédiction (PRED) du groupe de pixels comprenant :
- des moyens de sélection, dans le groupe de pixels, d'une première partition courante à prédire,
- des moyens de prédiction de ladite première partition courante sélectionnée, par rapport à une partition ayant déjà été codée, puis décodée et appartenant à un groupe de pixels voisin dudit groupe de pixels,
- des moyens de codage/décodage (MTQ/MTQI) de ladite première partition courante prédite,
- lesdits moyens de prédiction prédisant l'une après l'autre les autres partitions du groupe de pixels, chaque partition étant prédite par rapport à au moins une partition dudit groupe de pixels, qui a déjà été précédemment sélectionnée, codée, puis décodée,
- des moyens de sélection (DCN) parmi une pluralité d'ordres de parcours dans lesquels les partitions dudit groupe de pixels sont prédites, d'un ordre de parcours optimisant la prédiction dudit groupe de pixels selon un critère débit distorsion, ladite pluralité d'ordres de parcours comprenant :
- un ordre de parcours, dans lequel une partition courante est prédite par rapport à une partition dudit groupe de pixels, qui a déjà été précédemment sélectionnée, prédite, codée, puis décodée, et qui est immédiatement voisine de ladite partition courante, ledit ordre de parcours correspondant à l'ordre dans lequel les partitions ont été propagées,
- un ordre de parcours, différent de l'ordre dans lequel les partitions ont été propagées, dans lequel au moins une partition courante est prédite par rapport à deux partitions dudit groupe de pixels qui lui sont immédiatement voisines et qui ont déjà été précédemment sélectionnées, prédites, codées, puis décodées,
- un autre ordre de parcours différent de l'ordre dans lequel les partitions ont été propagées, ledit autre ordre de parcours étant dichotomique,
- des moyens (CE) de codage du groupe de pixels prédit (MBpréd) conformément à l'ordre de parcours sélectionné selon ledit critère.

6. Dispositif (DEC) de décodage d'un flux (F) de données représentatif d'une image ou d'une séquence d'images, ledit flux (F) comportant des données représentatives d'au moins un groupe de pixels dans une desdites images (IE), **caractérisé en ce qu'**il comporte:
- des moyens (DE) de décodage des données représentatives dudit au moins un groupe de pixels,
- des moyens (RI) de détermination, parmi lesdites données décodées, d'une partition initiale prédéterminée ayant la forme d'au moins une ligne brisée ou non brisée,
- des moyens de découpage partiel (PART) pour découper ledit groupe de pixels à décoder selon ladite partition initiale déterminée,
- des moyens de propagation (PROP) pour propager, de façon identique au codage, ladite partition initiale déterminée dans le reste dudit groupe de pixels à décoder, de façon à obtenir un groupe de pixels (MBpart) à décoder qui est découpé dans sa totalité, le reste dudit groupe de pixels à décoder étant découpé en une pluralité de partitions ayant chacune une forme adaptée pour occuper complètement, sans se chevaucher deux à deux, le reste dudit groupe de pixels à décoder,
- lesdits moyens de détermination (RI) déterminant en outre, parmi lesdites données décodées, un ordre de parcours desdites partitions qui a été sélectionné parmi une pluralité d'ordres de parcours lors du codage du groupe de pixels à décoder, comme optimisant la prédiction dudit groupe de pixels selon un critère débit distorsion, ladite pluralité d'ordres de parcours comprenant :
- un ordre de parcours, dans lequel une partition courante est prédite par rapport à une partition dudit groupe de pixels, qui a déjà été précédemment sélectionnée, prédite, puis décodée, et qui est immédiatement voisine de ladite partition courante, ledit ordre de parcours correspondant à l'ordre dans lequel les partitions ont été propagées,
- un ordre de parcours, différent de l'ordre dans lequel les partitions ont été propagées, dans lequel au moins une partition courante est prédite par rapport à deux partitions dudit groupe de pixels qui lui sont immédiatement voisines et qui ont déjà été précédemment sélectionnées, prédites, puis décodées,
- un autre ordre de parcours, différent de l'ordre dans lequel les partitions ont été propagées, ledit autre ordre de parcours étant dichotomique,
- un module de calcul de prédiction (PRED) du groupe de pixels à décoder comprenant :
- des moyens de sélection, dans le groupe de pixels à décoder, d'une première partition courante à prédire conformément audit ordre de parcours qui a été déterminé parmi lesdites données décodées,
- des moyens de prédiction de ladite première partition courante sélectionnée, par rapport à une partition ayant déjà été décodée et appartenant à un groupe de pixels voisin dudit groupe de pixels à décoder,
- des moyens de décodage de ladite première partition courante prédite,
- lesdits moyens de prédiction prédisant l'une après l'autre lesdites partitions, selon ledit ordre de parcours déterminé,
- des moyens (DECP) d'obtention d'un groupe de pixels décodé une fois que toutes les partitions dudit groupe de pixels ont été prédites et décodées conformément audit ordre de parcours déterminé.

7. Programme d'ordinateur comportant des instructions pour mettre en œuvre l'un des procédés selon l'une quelconque des revendications 1 à 3, lorsqu'il est exécuté sur un ordinateur.

## Patentansprüche

1. Verfahren zur Codierung eines Bilds oder einer Bilderfolge, die einen Fluss (F) von Daten erzeugt, der für mindestens eine Gruppe von Pixeln in einem der Bilder (IE) repräsentative Daten aufweist, **dadurch gekennzeichnet, dass** es die folgenden Schritte aufweist:
- Auswahl (Cl), für eine zu codierende Gruppe von Pixeln (MB), einer vorbestimmten Ausgangspartitionierung (P1), die die Form mindestens einer gebrochenen oder nicht gebrochenen Linie hat,
- Teilaufteilung (C2) der zu codierenden Gruppe von Pixeln gemäß der ausgewählten Ausgangspartitionierung,
- Verbreitung (C2) der ausgewählten Ausgangspartitionierung im Rest der zu codierenden Gruppe von Pixeln, um eine in ihrer Gesamtheit aufgeteilte Gruppe von Pixeln (MBpart) zu erhalten, wobei der Rest der Gruppe von Pixeln in eine Vielzahl von Partitionierungen aufgeteilt wird, die je eine Form haben, die geeignet ist, den Rest der zu codierenden Gruppe von Pixeln vollständig, ohne sich paarweise zu überlappen, zu besetzen,
- Vorhersage (C4) der Gruppe von Pixeln, die Folgendes enthält:
- Auswahl, in der Gruppe von Pixeln, einer vorherzusagenden aktuellen ersten Partitionierung,
- Vorhersage der ausgewählten aktuellen ersten Partitionierung bezüglich einer Partitionierung, die bereits codiert, dann decodiert wurde und zu einer der Gruppe von Pixeln benachbarten Gruppe von Pixeln gehört,
- Codierung/Decodierung der vorhergesagten aktuellen ersten Partitionierung,
- nacheinander Vorhersage der anderen Partitionierungen der Gruppe von Pixeln, wobei jede Partitionierung bezüglich mindestens einer Partitionierung der Gruppe von Pixeln vorhergesagt wird, die bereits vorher ausgewählt, codiert, dann decodiert wurde,
- Auswahl (C5), unter einer Vielzahl von Durchlaufreihenfolgen, in denen die Partitionierungen der Gruppe von Pixeln vorhergesagt werden, einer Durchlaufreihenfolge, die die Vorhersage der Gruppe von Pixeln gemäß einem Rate-Distortion-Kriterium optimiert, wobei die Vielzahl von Durchlaufreihenfolgen enthält:
- eine Durchlaufreihenfolge, in der eine aktuelle Partitionierung bezüglich einer Partitionierung der Gruppe von Pixeln vorhergesagt wird, die bereits vorher ausgewählt, vorhergesagt, codiert, dann decodiert wurde, und die der aktuellen Partitionierung direkt benachbart ist, wobei die Durchlaufreihenfolge der Reihenfolge entspricht, in der die Partitionierungen verbreitet wurden,
- eine Durchlaufreihenfolge, anders als die Reihenfolge, in der die Partitionierungen verbreitet wurden, in der mindestens eine aktuelle Partitionierung bezüglich zweier Partitionierungen der Gruppe von Pixeln vorhergesagt wird, die ihr direkt benachbart sind und die bereits vorher ausgewählt, vorhergesagt, codiert, dann decodiert wurden,
- eine weitere Durchlaufreihenfolge, anders als die Reihenfolge, in der die Partitionierungen verbreitet wurden, wobei die andere Durchlaufreihenfolge dichotomisch ist,
- Codierung (C6) der vorhergesagten Gruppe von Pixeln (MBpred) entsprechend der gemäß dem Kriterium ausgewählten Durchlaufreihenfolge.

2. Codierverfahren nach Anspruch 1, wobei der Datenfluss (F) Informationen bezüglich der Form der ausgewählten Ausgangspartitionierung (CH2) und der Durchlaufreihenfolge (O1; O2; O3) enthält, die für die Vorhersage der Partitionierungen der Gruppe von Pixeln ausgewählt wurde (CH3).

3. Verfahren zur Decodierung eines Datenflusses (F), der für ein Bild oder eine Bilderfolge repräsentativ ist, wobei der Fluss für mindestens eine Gruppe von Pixeln in einem der Bilder (IE) repräsentative Daten aufweist, **dadurch gekennzeichnet, dass** es die folgenden Schritte aufweist:
- Decodierung der für die mindestens eine Gruppe von Pixeln repräsentativen Daten,
- Bestimmung (D1), unter den decodierten Daten, einer vorbestimmten Ausgangspartitionierung, die die Form mindestens einer gebrochenen oder nicht gebrochenen Linie hat,
- Teilaufteilung (D2) der zu decodierenden Gruppe von Pixeln gemäß der bestimmten Ausgangspartitionierung,
- Verbreitung (D2), gleich der Codierung, der bestimmten Ausgangspartitionierung im Rest der zu decodierenden Gruppe von Pixeln, um eine zu decodierende Gruppe von Pixeln (MBpart) zu erhalten, die in ihrer Gesamtheit aufgeteilt ist, wobei der Rest der zu decodierenden Gruppe von Pixeln in eine Vielzahl von Partitionierungen aufgeteilt wird, die je eine Form haben, die geeignet ist, den Rest der zu decodierenden Gruppe von Pixeln vollständig, ohne sich paarweise zu überlappen, zu besetzen,
- Bestimmung, unter den decodierten Daten, einer Durchlaufreihenfolge der Partitionierungen, die unter einer Vielzahl von Durchlaufreihenfolgen bei der Codierung der zu decodierenden Gruppe von Pixeln ausgewählt wurde, als die Vorhersage der Gruppe von Pixeln gemäß einem Rate-Distortion-Kriterium optimierend, wobei die Vielzahl von Durchlaufreihenfolgen enthält:
- eine Durchlaufreihenfolge, in der eine aktuelle Partitionierung bezüglich einer Partitionierung der Gruppe von Pixeln vorhergesagt wird, die bereits vorher ausgewählt, vorhergesagt, dann decodiert wurde, und die der aktuellen Partitionierung direkt benachbart ist, wobei die Durchlaufreihenfolge der Reihenfolge entspricht, in der die Partitionierungen verbreitet wurden,
- eine Durchlaufreihenfolge, anders als die Reihenfolge, in der die Partitionierungen verbreitet wurden, in der mindestens eine aktuelle Partitionierung bezüglich zweier Partitionierungen der Gruppe von Pixeln vorhergesagt wird, die ihr direkt benachbart sind und die bereits vorher ausgewählt, vorhergesagt, dann decodiert wurden,
- eine weitere Durchlaufreihenfolge, anders als die Reihenfolge, in der die Partitionierungen verbreitet wurden, wobei die weitere Durchlaufreihenfolge dichotomisch ist,
- Vorhersage der zu decodierenden Gruppe von Pixeln, die Folgendes enthält:
- Auswahl, in der zu decodierenden Gruppe von Pixeln, einer vorherzusagenden aktuellen ersten Partitionierung entsprechend der Durchlaufreihenfolge, die unter den decodierten Daten bestimmt wurde,
- Vorhersage der ausgewählten aktuellen ersten Partitionierung bezüglich einer Partitionierung, die bereits decodiert wurde und die zu einer Gruppe von Pixeln gehört, die der zu decodierenden Gruppe von Pixeln benachbart ist,
- Decodieren der vorhergesagten aktuellen ersten Partitionierung,
- nacheinander Vorhersage der weiteren Partitionierungen gemäß der bestimmten Durchlaufreihenfolge,
- Erhalt einer decodierten Gruppe von Pixeln, sobald alle Partitionierungen der Gruppe von Pixeln entsprechend der bestimmten Durchlaufreihenfolge vorhergesagt und decodiert wurden.

4. Trägersignal eines Datenflusses (F), der für ein Bild oder eine Bilderfolge repräsentativ ist, wobei der Fluss (F) Daten aufweist, die für mindestens eine Gruppe von Pixeln in einem der Bilder (IE) repräsentativ sind, die gemäß Anspruch 1 oder 2 codiert wurde, **dadurch gekennzeichnet, dass**:
- bestimmte der repräsentativen Daten sich auf die Form mindestens einer gebrochenen oder nicht gebrochenen Linie einer vorbestimmten Ausgangspartitionierung beziehen, die zum Zeitpunkt der Vorhersage der Gruppe von Pixeln ausgewählt wurde,
- und bestimmte andere der repräsentativen Daten sich auf die ausgewählte Durchlaufreihenfolge beziehen, in der die die Gruppe von Pixeln formenden Partitionierungen vorhergesagt werden.

5. Codiervorrichtung (CO) eines Bilds oder einer Bilderfolge, die einen Datenfluss (F) erzeugt, der für mindestens eine Gruppe von Pixeln in einem der Bilder (IE) repräsentative Daten aufweist, **dadurch gekennzeichnet, dass** sie aufweist:
- Einrichtungen zur Auswahl (SP), für eine zu codierende Gruppe von Pixeln (MB), einer vorbestimmten Ausgangspartitionierung (P1), die die Form mindestens einer gebrochenen oder nicht gebrochenen Linie hat,
- Einrichtungen zur Teilaufteilung (PMB) der zu codierenden Gruppe von Pixeln gemäß der ausgewählten Ausgangspartitionierung,
- Einrichtungen zur Verbreitung (PROP) der ausgewählten Ausgangspartitionierung im Rest der zu codierenden Gruppe von Pixeln, um eine in ihrer Gesamtheit aufgeteilte Gruppe von Pixeln (MBpart) zu erhalten, wobei der Rest der Gruppe von Pixeln in eine Vielzahl von Partitionierungen aufgeteilt wird, die je eine Form haben, die geeignet ist, den Rest der zu codierenden Gruppe von Pixeln vollständig, ohne sich paarweise zu überlappen, zu besetzen,
- ein Rechenmodul der Vorhersage (PRED) der Gruppe von Pixeln, das enthält:
- Einrichtungen zur Auswahl, in der Gruppe von Pixeln, einer vorherzusagenden aktuellen ersten Partitionierung,
- Einrichtungen zur Vorhersage der ausgewählten aktuellen ersten Partitionierung bezüglich einer Partitionierung, die bereits codiert, dann decodiert wurde und zu einer der Gruppe von Pixeln benachbarten Gruppe von Pixeln gehört,
- Einrichtungen zur Codierung/Decodierung (MTQ/MTQI) der vorhergesagten aktuellen ersten Partitionierung,
- wobei die Vorhersageeinrichtungen nacheinander die anderen Partitionierungen der Gruppe von Pixeln vorhersagen, wobei jede Partitionierung bezüglich mindestens einer Partitionierung der Gruppe von Pixeln vorhergesagt wird, die bereits vorher ausgewählt, codiert, dann decodiert wurde,
- Einrichtungen zur Auswahl (DCN), unter einer Vielzahl von Durchlaufreihenfolgen, in denen die Partitionierungen der Gruppe von Pixeln vorhergesagt werden, einer Durchlaufreihenfolge, die die Vorhersage der Gruppe von Pixeln gemäß einem Rate-Distortion-Kriterium optimiert, wobei die Vielzahl von Durchlaufreihenfolgen enthält:
- eine Durchlaufreihenfolge, in der eine aktuelle Partitionierung bezüglich einer Partitionierung der Gruppe von Pixeln vorhergesagt wird, die bereits vorher ausgewählt, vorhergesagt, codiert, dann decodiert wurde, und die der aktuellen Partitionierung direkt benachbart ist, wobei die Durchlaufreihenfolge der Reihenfolge entspricht, in der die Partitionierungen verbreitet wurden,
- eine Durchlaufreihenfolge, anders als die Reihenfolge, in der die Partitionierungen verbreitet wurden, in der mindestens eine aktuelle Partitionierung bezüglich zweier Partitionierungen der Gruppe von Pixeln vorhergesagt wird, die ihr direkt benachbart sind und die bereits vorher ausgewählt, vorhergesagt, codiert, dann decodiert wurden,
- eine weitere Durchlaufreihenfolge, anders als die Reihenfolge, in der die Partitionierungen verbreitet wurden, wobei die weitere Durchlaufreihenfolge dichotomisch ist,
- Einrichtungen (CE) zur Codierung der vorhergesagten Gruppe von Pixeln (MBpred) entsprechend der gemäß dem Kriterium ausgewählten Durchlaufreihenfolge.

6. Vorrichtung (DEC) zur Decodierung eines Datenflusses (F), der für ein Bild oder eine Bilderfolge repräsentativ ist, wobei der Fluss (F) Daten aufweist, die für mindestens eine Gruppe von Pixeln in einem der Bilder (IE) repräsentativ ist, **dadurch gekennzeichnet, dass** sie aufweist:
- Einrichtungen (DE) zur Decodierung der für die mindestens eine Gruppe von Pixeln repräsentativen Daten,
- Einrichtungen (RI) zur Bestimmung, unter den decodierten Daten, einer vorbestimmten Ausgangspartitionierung, die die Form einer gebrochenen oder nicht gebrochenen Linie hat,
- Teilaufteilungseinrichtungen (PART) zur Aufteilung der zu decodierenden Gruppe von Pixeln gemäß der bestimmten Ausgangspartitionierung,
- Verbreitungseinrichtungen (PROP), um in gleicher Weise wie die Codierung die bestimmte Ausgangspartitionierung im Rest der zu decodierenden Gruppe von Pixeln zu verbreiten, um eine zu decodierende Gruppe von Pixeln (MBpart) zu erhalten, die in ihrer Gesamtheit aufgeteilt ist, wobei der Rest der zu decodierenden Gruppe von Pixeln in eine Vielzahl von Partitionierungen aufgeteilt wird, die je eine Form haben, die geeignet ist, vollständig, ohne sich paarweise zu überlappen, den Rest der zu decodierenden Gruppe von Pixeln zu besetzen,
- wobei die Bestimmungseinrichtungen (RI) außerdem unter den decodierten Daten eine Durchlaufreihenfolge der Partitionierungen, die aus einer Vielzahl von Durchlaufreihenfolgen bei der Codierung der zu decodierenden Gruppe von Pixeln ausgewählt wurde, als die Vorhersage der Gruppe von Pixeln gemäß einem Rate-Distortion-Kriterium optimierend bestimmen, wobei die Vielzahl von Durchlaufreihenfolgen enthält:
- eine Durchlaufreihenfolge, in der eine aktuelle Partitionierung bezüglich einer Partitionierung der Gruppe von Pixeln vorhergesagt wird, die bereits vorher ausgewählt, vorhergesagt, dann decodiert wurde, und die der aktuellen Partitionierung direkt benachbart ist, wobei die Durchlaufreihenfolge der Reihenfolge entspricht, in der die Partitionierungen verbreitet wurden,
- eine Durchlaufreihenfolge, anders als die Reihenfolge, in der die Partitionierungen verbreitet wurden, in der mindestens eine aktuelle Partitionierung bezüglich zweier Partitionierungen der Gruppe von Pixeln vorhergesagt wird, die ihr direkt benachbart sind und die bereits vorher ausgewählt, vorhergesagt, dann decodiert wurden,
- eine weitere Durchlaufreihenfolge, anders als die Reihenfolge, in der die Partitionierungen verbreitet wurden, wobei die weitere Durchlaufreihenfolge dichotomisch ist,
- ein Berechnungsmodul der Vorhersage (PRED) der zu decodierenden Gruppe von Pixeln, das enthält:
- Einrichtungen zur Auswahl, in der zu decodierenden Gruppe von Pixeln, einer vorherzusagenden aktuellen ersten Partitionierung gemäß der Durchlaufreihenfolge, die unter den decodierten Daten bestimmt wurde,
- Einrichtungen zur Vorhersage der ausgewählten aktuellen ersten Partitionierung bezüglich einer Partitionierung, die bereits decodiert wurde und zu einer der zu decodierenden Gruppe von Pixeln benachbarten Gruppe von Pixeln gehört,
- Einrichtungen zur Decodierung der vorhergesagten aktuellen ersten Partitionierung,
- wobei die Vorhersageeinrichtungen nacheinander die Partitionierungen gemäß der bestimmten Durchlaufreihenfolge vorhersagen,
- Einrichtungen (DECP) zum Erhalt einer decodierten Gruppe von Pixeln, sobald alle Partitionierungen der Gruppe von Pixeln entsprechend der bestimmten Durchlaufreihenfolge vorhergesagt und decodiert wurden.

7. Computerprogramm, das Anweisungen aufweist, um eines der Verfahren nach einem der Ansprüche 1 bis 3 durchzuführen, wenn es auf einem Computer ausgeführt wird.

## Claims

1. Method for coding an image or a sequence of images generating a data stream (F) comprising data representative of at least one group of pixels in one of said images (IE), **characterized in that** it comprises the steps of:
- selecting (C1), for a group of pixels (MB) to be coded, a predetermined initial partition (P1) taking the form of at least one broken or unbroken line,
- partially splitting (C2) said group of pixels to be coded according to the initial partition selected,
- propagating (C2) said initial partition selected in the rest of said group of pixels to be coded, so as to obtain a group of pixels (MBpart) split in its entirety, the rest of said group of pixels being split into a plurality of partitions each taking a form suitable for completely occupying, without overlapping in twos, the rest of said group of pixels to be coded,
- predicting (C4) the group of pixels comprising what follows:
- selecting, in the group of pixels, a first current partition to be predicted,
- predicting said first current partition selected, with respect to a partition having already been coded, then decoded and belonging to a group of pixels neighbouring said group of pixels,
- coding/decoding said first current partition predicted,
- predicting the other partitions of the group of pixels one after the other, each partition being predicted with respect to at least one partition of said group of pixels, which has already been previously selected, coded, then decoded,
- selecting (C5), from among a plurality of orders of traversal in which the partitions of said group of pixels are predicted, an order of traversal optimizing the prediction of said group of pixels according to a rate-distortion criterion, said plurality of orders of traversal comprising:
- an order of traversal, in which a current partition is predicted with respect to a partition of said group of pixels, which has already been previously selected, predicted, coded, then decoded, and which immediately neighbours said current partition, said order of traversal corresponding to the order in which the partitions have been propagated,
- an order of traversal, different from the order in which the partitions have been propagated, in which at least one current partition is predicted with respect to two partitions of said group of pixels which immediately neighbour it and which have already been previously selected, predicted, coded, then decoded,
- another order of traversal, different from the order in which the partitions have been propagated, said other order of traversal being dichotomic,
- coding (C6) the predicted group of pixels (MBpred) in accordance with the order of traversal selected according to said criterion.

2. Coding method according to Claim 1, wherein the data stream (F) comprises information relating to the form of said initial partition selected (CH2) and to the order of traversal (O1; O2; O3) which has been selected (CH3) for the prediction the partitions of said group of pixels.

3. Method for decoding a data stream (F) representative of an image or of a sequence of images, said stream (F) comprising data representative of at least one group of pixels in one of said images (IE), **characterized in that** it comprises the steps of:
- decoding the data representative of said at least one group of pixels,
- determining (D1), from among said decoded data, an predetermined initial partition taking the form of at least one broken or unbroken line,
- partially splitting (D2) said group of pixels to be decoded according to said initial partition determined,
- propagating (D2), in a manner identical to the coding, said initial partition determined, in the rest of said group of pixels to be decoded, so as to obtain a group of pixels (MBpart) to be decoded which is split in its entirety, the rest of said group of pixels to be decoded being split into a plurality of partitions each taking a form suitable for completely occupying, without overlapping in twos, the rest of said group of pixels to be decoded,
- determining, from among said decoded data, an order of traversal of said partitions which has been selected from among a plurality of orders of traversal during the coding of the group of pixels to be decoded, as optimizing the prediction of said group of pixels according to a rate-distortion criterion, said plurality of orders of traversal comprising:
- an order of traversal, in which a current partition is predicted with respect to a partition of said group of pixels, which has already been previously selected, predicted, then decoded, and which immediately neighbours said current partition, said order of traversal corresponding to the order in which the partitions have been propagated,
- an order of traversal, different from the order in which the partitions have been propagated, in which at least one current partition is predicted with respect to two partitions of said group of pixels which immediately neighbour it and which have already been previously selected, predicted, then decoded,
- another order of traversal, different from the order in which the partitions have been propagated, said other order of traversal being dichotomic,
- predicting the group of pixels to be decoded comprising what follows:
- selecting, in the group of pixels to be decoded, a first current partition to be predicted in accordance with said order of traversal which has been determined from among said decoded data,
- predicting said first current partition selected, with respect to a partition having already been decoded and belonging to a group of pixels neighbouring said group of pixels to be decoded,
- decoding said first current partition predicted,
- predicting said other partitions one after the other, according to said determined order of traversal,
- obtaining a decoded group of pixels once all of the partitions of said group of pixels have been predicted and decoded in accordance with said determined order of traversal.

4. Carrier signal bearing a data stream (F) representative of an image or of a sequence of images, said stream (F) comprising data representative of at least one group of pixels in one of said images (IE) which has been coded according to Claim 1 or 2, **characterized in that**:
- some of said representative data relate to the form of at least one broken or unbroken line of a predetermined initial partition which was selected at the moment of the prediction of said group of pixels,
- and some others of said representative data relate to said selected order of traversal, in which the partitions forming said group of pixels are predicted.

5. Device (CO) for coding an image or a sequence of images generating a data stream (F) comprising data representative of at least one group of pixels in one of said images (IE), **characterized in that** it comprises:
- means (SP) for selecting, for a group of pixels (MB) to be coded, a predetermined initial partition (P1) taking the form of at least one broken or unbroken line,
- means (PMB) for partially splitting said group of pixels to be coded according to said initial partition selected,
- means (PROP) for propagating said initial partition selected in the rest of said group of pixels to be coded, so as to obtain a group of pixels (MBpart) split in its entirety, the rest of said group of pixels being split into a plurality of partitions each taking a form suitable for completely occupying, without overlapping in twos, the rest of said group of pixels to be coded,
- a calculation module (PRED) for predicting the group of pixels comprising:
- means for selecting, in the group of pixels, a first current partition to be predicted,
- means for predicting said first current partition selected, with respect to a partition having already been coded, then decoded and belonging to a group of pixels neighbouring said group of pixels,
- means (MTQ/MTQI) for coding/decoding said first current partition predicted,
- said prediction means predicting the other partitions of the group of pixels one after the other, each partition being predicted with respect to at least one partition of said group of pixels, which has already been previously selected, coded, then decoded,
- means (DCN) for selecting, from among a plurality of orders of traversal in which the partitions of said group of pixels are predicted, an order of traversal optimizing the prediction of said group of pixels according to a rate-distortion criterion, said plurality of orders of traversal comprising:
- an order of traversal, in which a current partition is predicted with respect to a partition of said group of pixels, which has already been previously selected, predicted, coded, then decoded, and which immediately neighbours said current partition, said order of traversal corresponding to the order in which the partitions have been propagated,
- an order of traversal, different from the order in which the partitions have been propagated, in which at least one current partition is predicted with respect to two partitions of said group of pixels which immediately neighbour it and which have already been previously selected, predicted, coded, then decoded,
- another order of traversal, different from the order in which the partitions have been propagated, said other order of traversal being dichotomic,
- means (CE) for coding the predicted group of pixels (MBpred) in accordance with the order of traversal selected according to said criterion.

6. Device (DEC) for decoding a data stream (F) representative of an image or of a sequence of images, said stream (F) comprising data representative of at least one group of pixels in one of said images (IE), **characterized in that** it comprises:
- means (DE) for decoding the data representative of at least one group of pixels,
- means (RI) for determining, from among said decoded data, an predetermined initial partition taking the form of at least one broken or unbroken line,
- means (PART) for partially splitting said group of pixels to be decoded according to said initial partition determined,
- means (PROP) for propagating, in a manner identical to the coding, said initial partition determined, in the rest of said group of pixels to be decoded, so as to obtain a group of pixels (MBpart) to be decoded which is split in its entirety, the rest of said group of pixels to be decoded being split into a plurality of partitions each taking a form suitable for completely occupying, without overlapping in twos, the rest of said group of pixels to be decoded,
- said determination means (RI) further determining, from among said decoded data, an order of traversal of said partitions which has been selected from among a plurality of orders of traversal during the coding of the group of pixels to be decoded, as optimizing the prediction of said group of pixels according to a rate-distortion criterion, said plurality of orders of traversal comprising:
- an order of traversal, in which a current partition is predicted with respect to a partition of said group of pixels, which has already been previously selected, predicted, coded, then decoded, and which immediately neighbours said current partition, said order of traversal corresponding to the order in which the partitions have been propagated,
- an order of traversal, different from the order in which the partitions have been propagated, in which at least one current partition is predicted with respect to two partitions of said group of pixels which immediately neighbour it and which have already been previously selected, predicted, then decoded,
- another order of traversal, different from the order in which the partitions have been propagated, said other order of traversal being dichotomic,
- a calculation module (PRED) for predicting the group of pixels to be decoded comprising:
- means for selecting, in the group of pixels to be decoded, a first current partition to be predicted in accordance with said order of traversal which has been determined from among said decoded data,
- means for predicting said first current partition selected, with respect to a partition having already been decoded and belonging to a group of pixels neighbouring said group of pixels to be decoded,
- means for decoding said first current partition predicted,
- said prediction means predicting said partitions one after the other, according to said determined order of traversal,
- means (DECP) for obtaining a decoded group of pixels once all of the partitions of said group of pixels have been predicted and decoded in accordance with said determined order of traversal.

7. Computer program comprising instructions for implementing one of the methods according to any one of Claims 1 to 3, when it is executed on a computer.
